# EUROPEAN PATENT APPLICATION

(11) **EP 0 888 005 A2**
(43) Date of publication of application: **30.12.1998**
(21) Application number: 98110444.1
(22) Date of filing: 08.06.1998
(51) Int. Cl.: H04N 5/74

(54) **Display device for a portable electronic device**

(30) Priority: 24.06.1997 FI 972713
(71) Applicant: NOKIA MOBILE PHONES LTD., 02150 Espoo (FI)
(72) Inventor: Tappura, Kirsi, 33710 Tampere (FI)
(74) Representative: Pursiainen, Timo Pekka

(57) **Abstract**

The invention relates to a display device (1) for a portable electronic device, for visual display of information. The display device comprises at least a projection means (5), at least part of which forming an image area (17); at least one image element or light source (9a,9b,9c); and means for adjusting the optical features of the image element or light source. The information is arranged to be displayed on the image area in the functional position (use position) of the display device (use position). The display device is arranged to be changed so that the size of the display device is smaller in the non-functional position of the display device than in the functional position of the display device.

## Description

The present invention relates to a display device for an electronic device according to the introduction of the appended claim 1, as well as to a communication device according to the introduction of the appended claim 10.

In connection with portable devices, it is common to use display devices based on the LCD technique (liquid crystal display). Such display devices have a relatively small power consumption, if no background light is used in the display device. A small power consumption is important particularly in portable devices so that the energy of the power source of the device will not be consumed unnecessarily fast. With LCD devices, it is possible to implement simple graphic symbols and also dot matrix displays allowing the display of texts and graphic images. Dot matrix displays are used particularly as display devices in portable computers, wherein the dot matrix has usually the size of 640 x 480 pixels, *i.e.* a VGA display (video graphic array). Also in connection with portable communication devices, such as mobile stations, a need has arisen to present more information simultaneously. For example, reading text messages received by a mobile station is not easy to accomplish in mobile stations provided with a display comprising a few characters. Reading the whole text requires that the text is scrolled, *i.e.* only part of the text is shown at a time. A mobile station with the trade name Nokia Communicator utilises a 1/2 VGA level 640 x 200 display as the display device, wherein the display shows considerably more information than the display of an ordinary mobile station. One problem with such displays of portable devices is the fact that their size must be sufficiently large so that the information to be shown on the display is visible to the eye. On the other hand, attempts have been made to reduce the size of portable devices *e.g.* to facilitate their portability. Furthermore, it is an aim to reduce the weight of portable devices, wherein also the weight of the display should be as small as possible.

The use of an LCD display device is complicated by the fact that the LCD display requires an external light source, wherein it can only be used in a bright environment or a background light source must be used in connection with the display device. However, the power consumption of a background light source is relatively high as compared with the LCD display, which is not advantageous particularly in portable devices.

Another problem with display devices of prior art is the fact that the surface of the image field reflects light from the environment, wherein particularly incoming light from behind the viewer can substantially reduce the visibility of the information shown on the display device.

The properties of mobile stations are increased in new generations of mobile stations. The mobile station is no longer a mere telecommunication terminal for calls, but it is increasingly used for data processing, as a calender, as a notebook, *etc.* Thus, it is more and more important to provide the display device of the mobile station with supplementary capacity for displaying a larger quantity of information, which sets limits to the reduction of size and weight when using presently known display devices.

One purpose of the present invention is to improve the level of prior art in the field and to provide a display device for a portable electronic device which can, in the non-functional position, be placed in a smaller space than the size of the display field. The display device of the invention is characterised in what will be presented in the characterising part of the appended claim 1. The invention is based on the idea that in the functional position, the display device is set as a projection surface, and in the non-functional position, it is rolled or folded or placed in another way in a small size, wherein the display device and the whole electronic device can be put in a small space when the display device is not needed (non-functional position). The invention can be applied *e.g.* in connection with mobile stations and portable data processors. The communication device of the invention is further characterised in what will be presented in the characterising part of the appended claim 10.

The invention gives considerable advantages. The display device of the invention is light in weight, and the space required by it is substantially smaller than the size of display devices of prior art when the display device is in the non-functional position. This is one factor to make it possible to reduce the size of an electronic device provided with a display device more than when using presently known display devices. Moreover, it is also possible to achieve a larger angle of view with the display device of the invention than *e.g.* with LCD displays, wherein the direction of the display device is not so critical with respect to the viewer. Further, with the display device of the invention, it is possible to implement larger displays in devices of small size, wherein more information can be shown on the display at a time, or the information is shown in larger size so that it can be viewed also from a longer distance. The area of the image field of the display device can be made even larger than the surface area of the largest wall of the housing of the electronic device, whereas in display devices of prior art, the image field is limited by the size of the walls of the housing of the electronic device.

Also, the display device of the invention has the advantage that in multi-colour display devices, the beams of light used in forming different colours can be directed substantially to one and the same point, wherein *e.g.* the image is less grid-like than in multi-colour display devices of prior art, in which colour elements forming each pixel cannot be placed at the same point. In the display device of the invention, the image field can be made to substantially not reflect light from the environment, which improves clarity of the image.

In the following, the invention will be described in more detail with reference to the appended drawings, in which
- Fig. 1a: is a side view on a display device according to a first advantageous embodiment of the invention in the functional position, applied in connection with a mobile station,
- Fig. 1b: is a side view on a display device according to the first advantageous embodiment of the invention in the non-functional position, applied in connection with a mobile station,
- Fig. 1c: is a perspective view obliquely from the front of a display device according to the first advantageous embodiment of the invention in the functional position, applied in connection with a mobile station,
- Fig. 2: is a block chart showing a mobile station in which the application can be advantageously applied,
- Fig. 3a: is a side view on a display device according to a second advantageous embodiment of the invention in the functional position, applied in connection with a mobile station, and
- Fig. 3b: is a side view on a display device according to the second advantageous embodiment of the invention in the non-functional position, applied in connection with a mobile station.

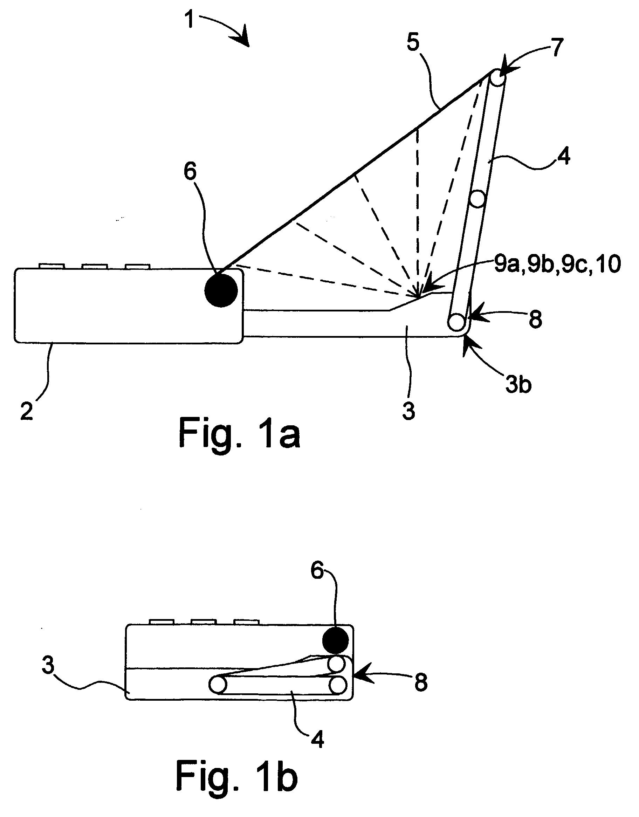

In Fig. 1a, the display device 1 of a portable electronic device according to the first embodiment of the invention is in the functional position, *i.e.* the display device 1 can be used for displaying information in visual form. In this embodiment example, the electronic device 2 is a communication device, such as a GSM mobile station. However, it is possible to apply the invention also in connection with other portable electronic devices than communication devices. Figure 1a is a side view seen from a first end 2a of the mobile station 2. The display device 1 comprises a fixing arm 3 which is fixed to the mobile station 2 preferably in a gliding manner. A supporting arm 4 is fixed preferably pivotally on the second end 3b of the fixing arm, wherein the support arm 4 can be turned at this joint. In this embodiment, the support arm 4 is made of two parts and these parts are connected to each other by a joint, which facilitates the placement of the supporting arm 4 inside the housing of the mobile station 2 when the display device is not needed.

For forming an image, the display device comprises a preferably flexible projection means 5 which is made of *e.g.* plastic and is rollable or foldable. The surface of the projection means 5 is advantageously substantially non-reflecting, wherein it does not reflect light from the environment to a significant extent. The projection means 5 is fixed preferably at its one end to a roll 6 which is placed *e.g.* inside the housing of the mobile station 2 and is fixed rotatably *e.g.* on the wall of the housing. The roll 6 can be placed also at another suitable place, such as at movable fixing arms 3, 3 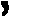 or at support arms 4, 4 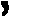 .

The rolling of the roll 6 causes the projection means 5 to be wound up around the roll 6 when the display means is set from the functional position to the non-functional position, and, in a corresponding manner, the projection means 5 to be reeled off when the display means is set from the non-functional position to the functional position. The roll 6 is provided with an advantageously elastic spring (not shown) or the like, whereby the projection means 5 can be wound up on the roll 6 when setting the display device in the non-functional position. The projection means 5 is advantageously fixed at one end to the second end 3b of the fixing arm. An auxiliary roll 7 is fixed to the second end 4b of the supporting arm 4, the flexible projection means 5 being arranged to be wound around the auxiliary roll 7. Thus, that part of the projection means 5 which is left between the auxiliary roll 7 and a back plate 8 can be used as a kind of light protection to absorb incoming environment light from behind, which will also reduce the requirement of brightness for light sources 9a, 9b, 9c.

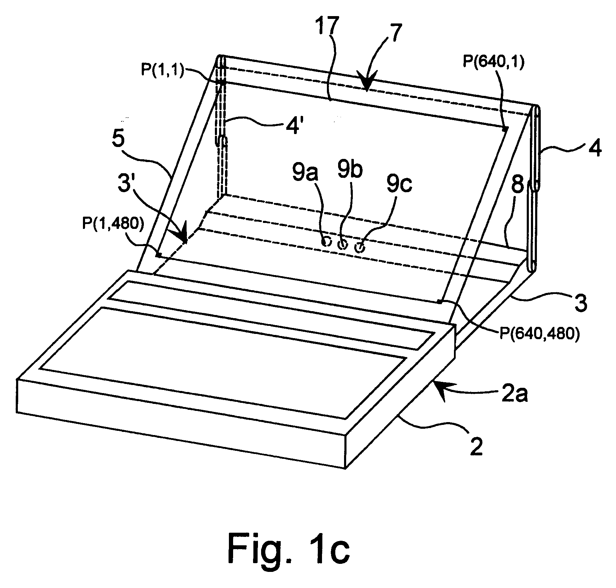

Also, the second end 2b of the mobile station 2 is provided with a substantially similar supporting arm structure 3 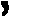 , 4 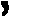 to that described above. These are shown by broken lines in Fig. 1c, where the display device 1 according to the first embodiment of the invention and the mobile station 2 are shown in a perspective view seen obliquely from the front. Figure 1c shows also an example of an image formed on the projection means 5. A back plate 8 is fixed between the fixing arms 3, 3 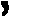 and functions also as the side wall of the housing of the mobile station 2 when the display device 1 is placed inside the housing of the mobile station 2.

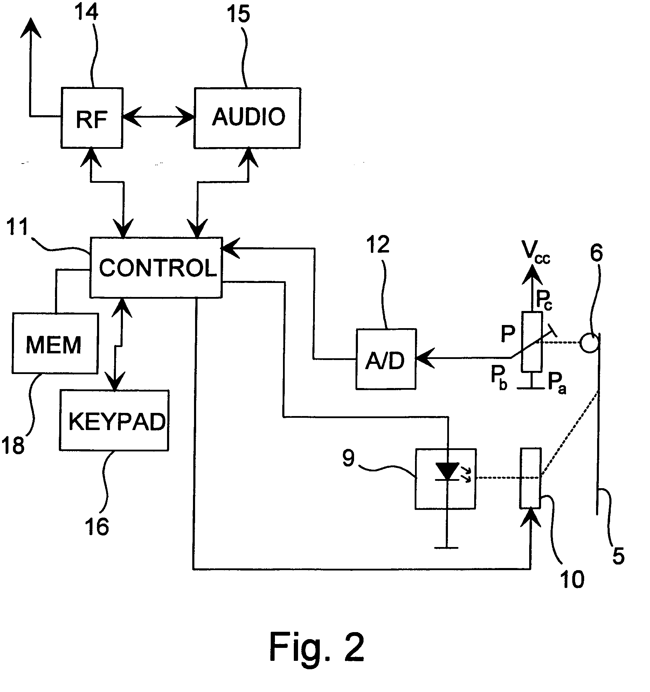

Light sources 9a, 9b, 9c are advantageously provided in the middle of the back plate 8. Beams of light generated by the light sources are controlled by light beam control means 10 (Fig. 2) for forming an image on the projection means 5. In a RGB colour display, light sources generating red (R), green (G) and blue (B) light are used as the light sources. The light sources 9a, 9b, 9c are *e.g.* laser diodes which are capable of generating a coherent beam of light with a sufficiently high intensity. The beam of light generated by a laser diode is typically conical, but it can be directed into a narrow coherent beam of light by optical correction, such as with collimating lenses. The optical correction is usually provided in connection with the laser diode. A red laser diode is currently commercially available; blue and green light can be formed *e.g.* with an infrared laser diode from which the required wavelengths of blue and green light are converted. The invention can also be applied as a monochrome display, wherein only one colour of light will be required.

The back plate 8 is made advantageously of a material with good thermal conductivity and light weight, such as aluminium. Thus, the back plate 8 will further cool down the light sources 9a, 9b, 9c and reduce the risk of their overheating.

In the following, image forming will be described in an example using a red light source 9a, but the corresponding principle can be applied also in other light sources 9b, 9c. The image consists of horizontal and vertical lines; for example, the VGA image mentioned above in this description consists of 480 horizontal lines and 640 vertical lines. The image to be formed by scanning is accomplished so that one or several beams of light are directed by means of the light beam control means 10 at a fast rate in different points of the image area 17 and simultaneously the intensity of the light beams is controlled according to the brightness of the image to be formed at the point where the beam is impinged at the moment. Substantially the whole image area 17 is scanned pixel by pixel. This principle is known as such *e.g.* from television picture tubes in which the image area is scanned in a two-dimensional manner, simultaneously adjusting the brightness of the light element to be formed. The eye will sense the variations in the brightness of the light beams at different points as the image. In multi-colour display units, each pixel is formed by light beams of different colours. The differences in the intensities of the different colours are sensed by the eye as a colour.

The alignment of the light beams can be made electromechanically *e.g.* by resonant means (mechanical resonant scanner) and mirrors or prisms, acousto-optically, or electro-optically. Acousto-optic alignment is based on the fact that an acoustic signal (such as an audio signal generated in a piezo element) changes the refractive index of an optical piece, wherein the angle of refraction of the light beam at the interface of the optical piece is changed. In a corresponding manner, electro-optical alignment is based on a change in the angle of refraction caused by an electric field in a piece. Also the micro mirror technique, known as such, is a solution which can be used in some solutions for guiding light beams from the light sources 9a, 9b, 9c to the image area 17.

At the edges of the image area 17, the angle of incidence of the light beams is sharper than close to the middle of the image area 17, if the light sources 9a, 9b, 9c are placed around the middle of the back plate 8. This may require additional optical correction, to reduce the scattering of the dot formed by the light beam on the edge areas. On the other hand, it is possible to aim at arranging as long a route of travel of the light beams as possible, *e.g.* by placing the light sources close to the housing of the electronic device and by supplying the back plate with mirrors, so that the range for the angle of deflection in the image area 17 is smaller than in a situation where the light sources 9a, 9b, 9c are very close to the image area 17. The correction can also be implemented by a program, by adjusting the rate of deflection or the display time and/or intensity of the dot between the edge and central areas of the image.

The intensity of the light beam generated by the light source 9a, 9b, 9c is adjusted according to the brightness of the corresponding dot in the image. The intensity can be adjusted advantageously either by modulating the light source 9a, 9b, 9c directly or in an acousto-optical manner. A directly modulating signal is usually in the pulse form, pulse width modulation, but with some light sources it is possible to use analog modulation (laser diode). In acousto-optic modulation, pulse modulation is primarily applied.

Formation of the image is usually started by aligning the light beam from the light sources 9a, 9b, 9c to the upper left corner p(1,1) of the image and adjusting the brightness of the light beams to correspond substantially to the brightness and colour desired for this dot. Next, the light beams are guided in the horizontal direction to the adjacent dot p(2, 1) and the intensity of the light beams is adjusted accordingly. When the whole line has been formed (scanned) on the projection means, the light beams are aligned to the beginning of the next line p(1, 2) if interlaced scanning is not used, or to the beginning of the third line p(1, 3) in the case that interlaced scanning is used. After the last dot p(640, 480) of the last line, the operation returns to the initial dot p(1, 1) again, whereafter the operation is continued as described above. In interlaced image forming, the even lines are scanned respectively before the forming of a new image is started at the initial dot p(1, 1). It is obvious that interlacing can also be conducted by starting first with the even lines and scanning the odd lines thereafter. In another advantageous alternative, the direction of scanning is changed when scanning different lines. Thus, for example the first line is scanned starting from the first dot of the line p(1, 1), the next line is scanned starting from the last dot (for example, p(640, 2)), after this again from the first dot (for example, p(1, 3)), *etc.* This alternative has the advantage that mechanical scanning is conducted at a higher rate, because when moving from one line to another it is not necessary to do other alignment than the transfer to a new line.

The image to be formed on the display device is usually stored in an image memory, wherein for scanning the line, information is retrieved from the image memory on the dot to which the light beam is impinged at the time, and the brightness of the light beam is set to correspond to the stored value. The image memory can be a separate random access memory, or *e.g.* the random access memory (RAM) of the memory means 18 of the electronic device can be used as the image memory. In multi-colour displays, the intensity values of the dots are typically stored for each light source (colour) 9a, 9b, 9c. The scanning can be implemented irrespective of the order in which the information was stored in the image memory, wherein the two-way scanning described above can be implemented by reading from the image memory in an order corresponding to the scanning.

The difference between a monochrome display and a multi-colour display is primarily the fact that there is only one light beam to be controlled. The image forming described above is prior art, wherein there is no need to describe it more closely in this context.

In a mobile station according to Fig. 2, the image forming described above is implemented primarily by a program in the application software of a control means 11, preferably stored in the memory means 18.

A display device 1 according to the invention can still be supplemented with a reaction coupling for correcting possible non-linearities of the light sources as well as for adjusting changes in brightness caused by changes in the temperature of the environment and by wearing of the light sources, irrespective of the modulation. The reaction coupling will also correct individual variation between different light sources so that *e.g.* the brightness level of a new light source replacing a defective light source can be made substantially equal. For the reaction coupling, it is possible to use *e.g.* a light diode for detecting the brightness of the light diode. Laser diodes have been developed in which the light diode is integrated in the same housing, wherein the placement of the detector will require no additional mechanisms.

In a display device according to the first embodiment of the invention, light beams were directed to the projection means 5 from the back (back projection). The projection means 5 is permeable to light, wherein the image can be seen on the front side. The display device 1 can also be implemented by front projection, with another kind of mechanical construction. However, back projection allows a slightly better contrast than front projection.

The above description was of image forming by using one light source 9a, 9b, 9c for each colour. However, it is also possible to implement the display device of the invention with several light sources (not shown), wherein the scanning angle does not become so large, because the light beam from each light source scans only part of the image area 17 in the scanning direction. Several light sources can also be used in a way that each light source is used to scan one line at a time, wherein it is possible to scan several lines simultaneously. In such display device embodiments with several light sources, the brightness of the image can be made better, because several images can be formed in the same time as one image by using one light source. Thus, the eye detects a brighter image. For example with three light sources for each colour, the scanning area for each light source is only one third of the entire image area. Moreover, it is possible to use *e.g.* a line laser comprising light sources whose number corresponds to the number of lines in one direction. Thus it will suffice that light beams are scanned in only one direction. With laser diodes, however, this will impair the efficiency in situations where sufficient luminosity can be achieved with only one light source, but on the other hand, the mechanical implementation will be simpler. In scanning, it is possible to use *e.g.* a rotating polygonal mirror, such as an octagonal mirror, which directs the light beams formed by the whole line of light sources to the correct place in the image area 17.

The display device 1 according to the first embodiment of the invention is set from the functional position to the non-functional position by folding first the support arms 4, 4' ca. 180° at the middle part, wherein the support arms 4, 4' are in the minimum length. Next, the folded support arms 4, 4' are bent preferably substantially in alignment with the fixing arms 3, 3'. After this, the fixing arms 3, 3' are pushed inside the housing of the mobile station 2, wherein the projection means 5 is coiled up around the roll 6. The mobile station 2 is now compact and easily portable.

The display device 1 can be set into the functional position by first pulling out the fixing arms 3, 3' from the housing of the mobile station 2. Next, the support arms 4, 4' are turned ca. 180° at the joint, wherein the length of the support arms 4, 4' is the maximum. In connection with pulling out the fixing arms 3, 3' and bending the support arms 4, 4', the projection means 5 is uncoiled from the roll 6 and is in the use position immediately after bending the support arms 4, 4'.

The display device can also be implemented in a way that the support arms 4, 4' rise to the use position by means of spring forces or the like when the fixing arms 3, 3' are pulled out to their use position.

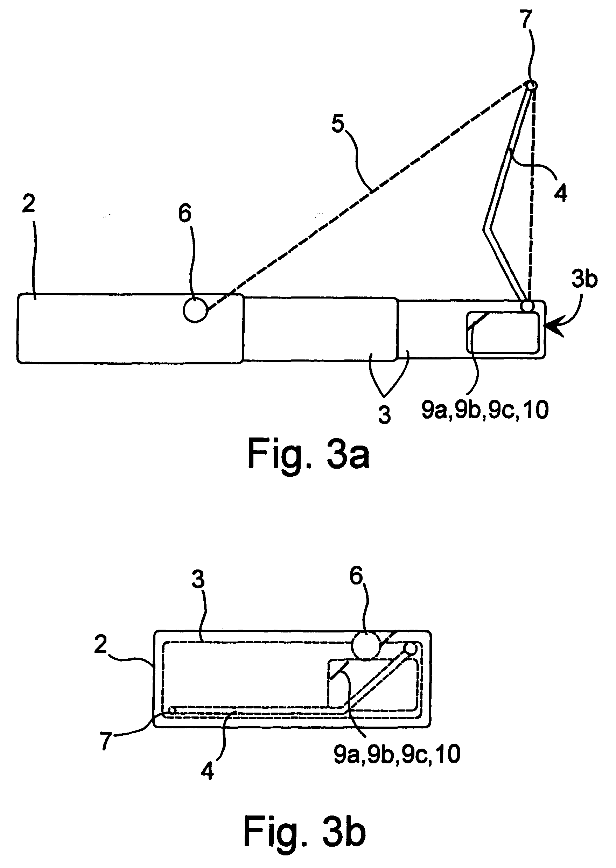

Figure 3a shows the structure of a display device 1 according to a second advantageous embodiment in the functional position, seen from the side, and applied in connection with a mobile station 2. Figure 3b, in turn, shows the display device 1 according to the second embodiment of the invention in the non-functional position. The difference to the display device according to the first embodiment of the invention lies primarily in that the fixing arm 3 consists of two or more parts which can be placed in the non-functional position at least partly inside or next to each other, wherein the length of the fixing arm 3, 3 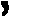 is shorter than in the use position, *i.e.* they form a kind of telescopic structure. The support arm 4, 4 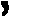 consists of one part and is advantageously bent in an angular form. The display device 1 can be set to the functional position by pulling out the fixing arms 3, 3 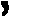 and then turning the support arms 4, 4 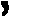 upwards. The display device is set to the non-functional position by turning the support arms 4, 4 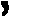 to the lowermost position and inserting the fixing arms 3, 3 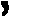 inside the housing of the mobile station 2.

The contrast can be further improved and the disturbing effect of light from the environment can be reduced by making that part of the projection means 5 which is outside the image area 17 darker (poorly or not at all permeable to light or light-reflecting), advantageously at least the part between the auxiliary roll 7 and the back plate 8. Also, the display device can be provided with walls to be lifted on the sides of the projection means 5, thus reducing the entry of light from the environment to the back of the projection means 5 from the sides.

Moreover, the display device according to the invention has the advantage that focusing with collimated light beams on the surface of the projection means 5 can vary to some extent without harm to readability. Thus, it is easier to set the distance between the projection means and the light sources to the right distance.

The display device according to the invention can still be supplemented with articulated means at the first end of the fixing means, wherein the whole display device can be turned in a direction substantially perpendicular to the main plane of the projection means, *i.e.* the angle between the housing of the electronic device and the projection means can be changed. Thus, by adjusting the angle, it is possible to find the position which is most advantageous for the display device in each use situation.

Also, the projection means 5 can be implemented to amplify the intensity of the light beams *e.g.* by directing the light beams penetrating the image surface towards the viewer and reducing the scattering from the image surface. Using such an image surface it is possible to achieve the same brightness effect with a smaller intensity of the light beams, wherein the power consumption of the light sources can be reduced. On the other hand, the amplification reduces the angle of viewing, but this is not significant in normal use situations of the electronic device.

In the situation of use of the electronic device, a surface of the whole image area 17 of the projection means 5 is not always needed. Thus, only the necessary part of the projection means 5 is advantageously pulled out from the electronic device. The display device 1, advantageously one support arm 4, 4 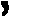 , is provided with mechanical setting points (not shown) that are advantageously detected by contact and on the basis of which it is possible to determine the display area which is exposed at the time and to direct the light beams preferably only to this image area which is outside the electronic device and is visible to the user. Instead of mechanical setting points, also other detectors, known as such, for determining the visible image area. Further, the display device 1 according to the invention can be provided with manual projection adjustment *e.g.* for precise focusing of the image. Moreover, in connection with the display device 1, it is possible to use *e.g.* mechanical sensors for controlling the turning-on of the display device advantageously so that when the display device is in the non-functional position (inside the electronic device), the display device 1 is turned off, and, in a corresponding manner, when the display device 1 is in the functional position, the display device 1 is turned on. The block diagram of Fig. 2 shows, in a reduced manner, the use of a helical potentiometer P as a detector so that the gliding contact of the helical potentiometer P is coupled either indirectly or directly to the rotational axis of the roll 6. Thus, the resistance between the glide Pb and the ends Pa, Pc of the helical potentiometer P is changed by rotation of the roll 6. The resistance is measured *e.g.* between the first end Pa and the glide advantageously as the potential difference which is preferably converted by an analog/digital converter 12 to a digital message. On the basis of this digital message, the control means 11 can conclude how much the projection means 5 is rolled to be visible.

Instead of a helical potentiometer P, it is also possible to use one or several switches (not shown), wherein at least two positions of the projection means 5 can be concluded from the position of the switch, which will be sufficient in most common applications.

The control means 11 comprises advantageously a control means, such as a microcontroller (micro processing unit, MCU) or the like, of the electronic device, but the invention can also be applied in a way that the display device 1 is equipped with a separate controller, advantageously a microcontroller. There are microcontrollers which comprise not only a processor but also a memory (RAM, ROM/EPROM/EEPROM), connection circuits (I/O) and even analog/digital converters. The operations required for controlling the display device 1 can thus be formed primarily in the application software of the control means 11.

Further, the display device 11 of the invention can be applied in a way that it is used as a projector, wherein the image is projected *e.g.* on a wall surface. This can be implemented *e.g.* in a way that the back plate 8 is turned around the longitudinal axis to a suitable extent, wherein the light beams from the light sources are directed to the wall surface. If necessary, the intensity of the light sources 9a, 9b, 9c can be raised with an external power source and/or with additional light sources. Such a display device 1 is preferably equipped with a detector generating an identification signal which can be used by the control means of the display device to conclude whether the normal display mode or the wall projection mode is used and to control the scanning and the intensity of the light beams correspondingly.

With laser diodes, it is possible to achieve light beams with a high intensity which can be harmful when directed straight to the eye of the viewer. This kind of a situation can occur for example when the scanning of the light beam is stopped in a failure situation. Thus, the light sources 9a, 9b, 9c are preferably turned off by interrupting the power supply or by setting the voltage of the modulating signal to a level that adjusts the intensity of the light sources 9a, 9b, 9c to a harmless level. This level is typically about 0 V.

In addition to the display device 1, the mobile station 2 may be equipped with a display device 13 of prior art. This is for example one where it is possible to display a few characters, wherein *e.g.* in the case of an incoming call, the user may be informed of the calling telephone number. Further, the block diagram of Fig. 2 shows the radio part 14, the audio part 15 and the keypad 16 of the mobile station as an example, but a more detailed description of these parts will not be necessary for understanding the present invention.

Although the above description deals with display devices 1 that can be placed inside the housing of an electronic device, the invention can also be implemented in a way that the display device is placed outside the housing of the electronic device, *e.g.* to the bottom of the housing of a mobile station, wherein the display device 1 can be supplemented to already existing electronic devices and, notwithstanding, the size of the electronic device is not increased to a significant degree. The electronic device is advantageously equipped with the necessary fixing means and connections by means of which the display device can be fixed to the housing of the electronic device and the signals required for displaying information can be transmitted to the display device.

The invention is not limited solely to the embodiments described above, but it can be modified within the scope of the appended claims. As stated above in this description, the light sources 9a, 9b, 9c can be placed, instead of the back plate 8, also inside the electronic device, and the back plate 8 is provided with mirrors for directing the light beams generated by the light sources to the image area 17 of the projection means 5. The focusing optics required for scanning can be placed close to the light sources or mirrors.

The change of the use position of the display device 1 between the functional mode and the non-functional mode can be conducted also by a motor, wherein the change of the functional mode of the display device can also be effected *e.g.* by control commands (on/off) entered in the keypad of the electronic device, for example by menu functions.

Further, the display device of the invention can be easily provided with a sensor for measuring the luminosity of the environment. Thus, the intensity of the light sources can be best adjusted in use situations to conform with the luminosity of the environment.

Although a rollable projection means is presented above, it is obvious that the display device 1 according to the invention can also be applied in connection with projection means 5 whose size is arranged variable in other ways. One such alternative embodiment is a projection means arranged to be foldable. Also in this case, the size of the display device 1 is smaller in the non-functional position than in the functional position.

The invention is not limited solely to display devices operating on the principle of projection. One alternative embodiment is to use an active projection means, wherein the image is formed by using light sources or other image elements which are arranged in the projection means and whose optical features can be changed electrically. In projection means of this kind, one should consider its smallest allowable bending radius, wherein this is preferably the minimum radius for the roll 6.

The display device of the invention can be applied also in other electronic devices than mobile station. These uses include portable computers and electronic notepads.

## Claims

1. Display device (1) for a portable electronic device, for visual display of information, the display device (1) comprising at least a projection means (5), at least part of which forming an image area (17); at least one image element or light source (9a, 9b, 9c); and means (11) for adjusting the optical features of the image element or light source, wherein the information is arranged to be displayed on the image area (17) in the functional position (use position) of the display device, **characterised** in that the display device (1) is arranged to be changed so that the size of the display device (1) is smaller in the non-functional position of the display device (1) than in the functional position of the display device (1).

2. Display device (1) according to claim 1, **characterised** in that at least part of the projection means (5) is arranged to be rollable, wherein in the non-functional position of the display device, said part of the projection means (5) is rolled up, and in the functional position, said part is at least partly rolled out.

3. Display device (1) according to claim 1, **characterised** in that at least part of the projection means (5) is arranged foldable, wherein in the non-functional position of the display device, said part of the projection means (5) is folded up, and in the functional position, said part is at least partly folded out.

4. Display device (1) according to any of the claims 1 to 3, **characterised** in that the means (11) for adjusting the optical features of the light source (9a, 9b, 9c) comprise means for adjusting the brightness of the light source (9a, 9b, 9c).

5. Display device (1) according to any of the claims 1 to 4, **characterised** in that it comprises further means for focusing the light beam generated by the light source (9a, 9b, 9c) to the image area (17) of the projection means (5).

6. Display device (1) according to any of the claims 1 to 5, **characterised** in that the light source (9a, 9b, 9c) is a laser diode

7. Display device (1) according to any of the claims 1 to 6, **characterised** in that it is arranged to be placed in connection with the housing of the electronic device, outside the same.

8. Display device (1) according to any of the claims 1 to 6, **characterised** in that it is arranged to be placed inside the housing of the electronic device (2) in the non-functional position.

9. Display device (1) according to any of the claims 1 to 8, **characterised** in that the surface area of the image area (17) is greater in the functional position of the display device (1) than the surface area of the largest wall of the housing of the electronic device (2).

10. Communication device comprising a display device (1) that comprises at least a projection means (5), at least part of which forming an image area (17); at least one image element or light source (9a, 9b, 9c); and means (11) for adjusting the optical features of the image element or light source, **characterised** in that the display device (1) is arranged to be changed so that the size of the display device (1) is smaller in the non-functional position of the display device (1) than in the functional position of the display device (1).
